## Europäisches Patentamt

## European Patent Office

## Office européen des brevets

(11) Veröffentlichungsnummer: **0 062 231**
**B1**

(12) **EUROPÄISCHE PATENTSCHRIFT**

(45) Veröffentlichungstag der Patentschrift:
11.09.85

(51) Int. Cl.⁴: **A 21 B 1/28,** A 21 B 3/00,
F 24 C 15/32

(21) Anmeldenummer: **82102430.4**

(22) Anmeldetag: **24.03.82**

(54) **Gasbeheizter Backofen mit Umwälzventilator.**

(30) Priorität: **03.04.81 DE 3113418**

(43) Veröffentlichungstag der Anmeldung:
**13.10.82 Patentblatt 82/41**

(45) Bekanntmachung des Hinweises auf die Patenterteilung:
**11.09.85 Patentblatt 85/37**

(84) Benannte Vertragsstaaten:
**AT FR GB NL**

(56) Entgegenhaltungen:
**FR - A - 2 218 539**
**FR - A - 2 353 020**
**US - A - 1 657 959**
**US - A - 1 822 106**
**US - A - 3 710 775**

(73) Patentinhaber: **Ruhrgas Aktiengesellschaft,
Huttropstrasse 60 Postfach 10 32 52,
D-4300 Essen 1 (DE)**

(72) Erfinder: **Sommers, Hans, Dipl.-Ing.,
Friedrich-List-Strasse 9, D-4300 Essen 1 (DE)**
Erfinder: **Hanselmann, Dieter, Ing. grad.,
Gathestrasse 12, D-4330 Mülheim/Ruhr (DE)**
Erfinder: **Panek, Herbert, Am Strandbad 10,
D-4270 Dorsten 21 (DE)**

(74) Vertreter: **Zenz, Joachim Klaus, Dipl.-Ing. et al, ZENZ &
HELBER Patentanwälte Am Ruhrstein 1,
D-4300 Essen 1 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft einen gasbeheizten Backofen mit einem an der Rückwand des Backofens angeordneten Umwälzventilator, der die Zirkulation eines Abgas-Luft-Gemisches durch den Backraum bewirkt und in dessen Einflußbereich sich Führungsbleche für das Abgas-Luft-Gemisch befinden, und einem aus Gasdüse, Mischrohr und Brennerrohr bestehenden Gasbrenner, der unter dem Bodenblech des Backraumes in einem Brennraum angeordnet ist.

Die bisher bekannten Backöfen dieser Art (US-A 3 710 775) werden mit unterstöchiometrisch arbeitenden Vormischbrennern beheizt. Bei diesen Brennern saugt der Gasstrahl hinter der Gasdüse sogenannte Primärluft ein, die aber allein zur vollständigen Verbrennung nicht ausreicht. Die sogenannte Sekundärluft diffundiert in die entstehenden Flammen ein. Der Luftzutritt zum Verbrennungsraum erfolgt bei diesen Backöfen durch wenigstens eine Öffnung mit einem großen Gesamtquerschnitt. Infolgedessen ist die Sekundärluftmenge bei diesen Brennern bzw. Backöfen nicht regel- bzw. steuerbar. Da die Sekundärluftmenge schon bei Vollast verhältnismäßig groß sein muß, damit die Verbrennung vollständig abläuft und weil wegen der konstanten Sogwirkung des Ventilators sowie des praktisch konstanten Auftriebes bei Verringerung der Wärmebelastung, d. h. bei Teillast, die Sekundärluftmenge noch größer wird, ist der Gesamtluftdurchsatz durch den Backofen sehr groß und der Wirkungsgrad allgemein verhältnismäßig schlecht.

Um den Brennstoff optimal auszunutzen, besteht daher der Wunsch, den Voll- und den Teillastwirkungsgrad zu erhöhen.

Da das Abgas des Brenners direkt mit dem Backgut in Kontakt kommt, besteht außerdem das Bedürfnis, den Schadstoffgehalt, insbesondere den Stickstoffoxid-Gehalt des Abgases soweit wie möglich zu verringern.

Es ist bekannt, daß sich durch überstöchiometrische Betriebsweise eines Gasbrenners — d. h. z. B. dadurch, daß allein der Gasstrahl die stöchiometrische Verbrennungsluftmenge sowie eine geringe Überschußmenge ansaugt, wobei vor der Verbrennung Verbrennungsgas und Verbrennungsluft homogen miteinander gemischt werden — ein äußerst geringer Stickstoffoxid $(NO_x)$-Gehalt im Abgas erreichen läßt. Außerdem kann mit derartigen Brennern ein hoher Wirkungsgrad bei Voll- und Teillast erreicht werden, weil der Brenner selbst immer optimal mit etwa gleicher Luftzahl überstöchiometrisch arbeitet.

Es ist jedoch noch kein gattungsgemäßer Backofen bekannt, der durch einen Gasbrenner beheizt wird, der eine überstöchiometrische Betriebsweise mit den oben aufgezählten Vorteilen gestattet. Die bisher bekannten Brennerkonstruktionen zur Backofenbeheizung sind für eine derartige Betriebsweise nicht geeignet. Die bekannten konstruktiven Merkmale überstöchiometrisch vormischender Brenner, z. B. Kochstellenbrenner, sind für sich allein nicht für die Ausführung von Umluft-Backofen-Brennern anwendbar, weil die Luftzufuhr zum Gasbrenner durch den Ventilatorsog beeinflußt wird und weil an solche Brenner die Forderung gestellt wird, daß sie auch bei Ausfall oder vorübergehender Außerbetriebnahme des Ventilators, z. B. beim Öffnen der Backofentür, einwandfrei arbeiten müssen.

Aufgabe der Erfindung ist es demgemäß, einen gattungsgemäßen gasbeheizten Backofen zu schaffen, dessen Brenner eine ungestörte überstöchiometrische Betriebsweise ermöglicht, um damit die bekannten Vorteile wie $NO_x$-armes Abgas, einen großen Regelbereich und einen hohen Wirkungsgrad im Voll- und Teillastbereich zu erzielen. Der Brenner soll unabhängig vom Betrieb des Umwälzventilators optimal arbeiten und konstruktiv einfach aufgebaut sein.

Die Erfindungsaufgaben werden gelöst durch die in den Ansprüchen 1 bis 3 genannten Merkmale.

Die Erfindung lehrt zunächst, daß der Brennraum gegen unmittelbaren Luftzutritt von außen geschlossen ist, daß mindestens die Eintrittsöffnung des Mischrohres und die Gasdüse des in bekannter Weise mit überstöchiometrischer Luftvormischung betriebenen Gasbrenners sich in einem Ansaugraum befinden, der Luftzutrittsöffnungen sowie mindestens eine Druckausgleichsöffnung zwischen dem Ansaugraum und dem Brennraum besitzt, daß das im Brennraum befindliche Brennerrohr im Inneren eine Verteilvorrichtung besitzt und auf der Oberseite ein Flammengitter aufweist, daß seitlich am Brennerrohr Abschirmbleche verlaufen, und daß der freie Durchtrittsquerschnitt der Luftzutrittsöffnungen etwa 150 mm² bis 350 mm², vorzugsweise 250 mm², pro kW Nennwärmebelastung des Brenners beträgt.

Durch die Kapselung mindestens der Eintrittsöffnung des Mischrohres und der Gasdüse wird erreicht, daß in das Mischrohr nur die in den Ansaugraum eintretende reine Luft eingesogen werden kann. Durch die der Nennwärmebelastung des Brenners entsprechend dimensionierten Luftzutrittsöffnungen gelangt nur eine bestimmte Gesamtluftmenge in den Ansaugraum und damit in den Ansaugbereich des Injektors.

Ein in jeder Beziehung einwandfreier, optimaler Betrieb des überstöchiometrisch vormischenden Brenners ohne Beeinflussung durch den Auftrieb des Abgases und die Sogwirkung des Ventilators wird erreicht durch die Druckausgleichsöffnung zwischen Ansaug- und Brennraum, die gewährleistet, daß an der Ansaugöffnung des Mischrohres und am Brennerrohr annähernd der gleiche Druck herrscht. — Nur unter solchen Bedingungen arbeitet dieser Brenner selbst bei unterschiedlicher Wärmebelastung mit annähernd konstanter Luftzahl unter Bildung eines $NO_x$-armen Abgases.

Die Funktion des Erfindungsgegenstandes und seine vorteilhafte Ausgestaltung werden nachstehend anhand des in der Zeichnung dargestellten Ausführungsbeispiels näher erläutert. Es zeigt schematisch

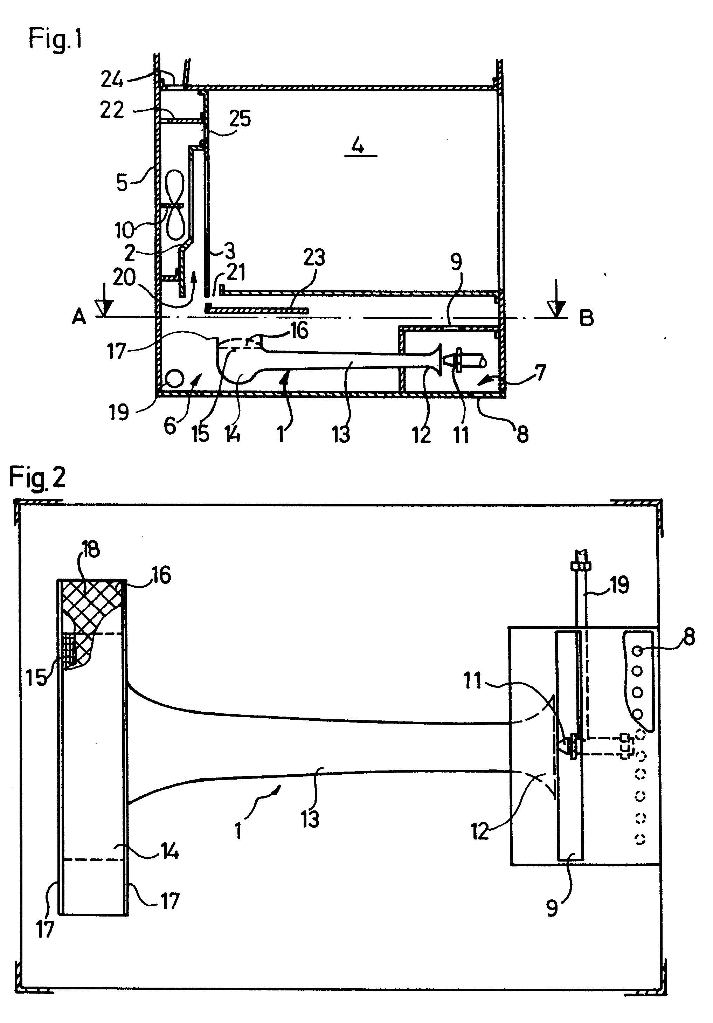

Fig. 1 einen seitlichen Längsschnitt durch einen erfindungsgemäßen Backofen,

Fig. 2 eine vergrößerte Ansicht gemäß Schnitt A-B in Fig. 1.

Der dargestellte Backofen kann z. B. Bestandteil eines Gasherdes sein, aber auch als selbständige Einbaueinheit Anwendung finden.

Im Backofengehäuse befindet sich unterhalb des Backraumes 4 der Brennraum 6, in dem die Verbrennung stattfindet. An der Rückwand 5 des Backofens ist der Umwälzventilator 10 angeordnet, in dessen Einflußbereich sich Führungsbleche 2 und 3 befinden, die sich nicht über die gesamte Breite des Backraumes erstrecken. Das aus dem Brennraum bzw. dem Backraum vom Umwälzventilator 10 angesaugte Abgas-Luft-Gemisch strömt seitlich an den Führungsblechen 2 und 3 vorbei bzw. durch Bohrungen 25 sowie weitere nicht dargestellte Öffnungen im Führungsblech 3, so daß auf diese Weise unter Einfluß des Ventilators eine Zirkulation des Abgas-Luft-Gemisches durch den Backraum erzeugt wird. Der Ventilator 10 mischt so das vom Brennraum 6 über den Kanal 20 zwischen den Führungsblechen 2 und 3 kommende Abgas-Luft-Gemisch zu dem im Backraum zirkulierenden Gemisch hinzu. Der Überschuß strömt infolge des Auftriebes weiter zum Abgasaustritt 24. Eine direkte Förderung des Abgas-Luft-Gemisches durch den Umwälzventilator zum Abgasaustritt wird durch ein Widerstandsblech 22 verhindert. Zur weiteren Verringerung des Einflusses des Ventilators auf den Gesamtluftdurchsatz des Backofens befindet sich im Backraumboden eine der Ventilatorleistung und dem Querschnitt des Kanals 20 angepaßte Öffnung 21.

Der Brenner 1 besteht aus einer Gasdüse 11, einem konischen Mischrohr 13 mit Eintrittsöffnung 12 und einem sich anschließenden rechtwinklig zum Mischrohr liegenden Brennerrohr 14. Auf der Oberfläche des Brennerrohres 14 befindet sich ein gewölbtes Flammengitter 16, das hier als Streckmetallgitter ausgebildet ist. Andere Ausführungen des Flammengitters, z. B. perforiertes Blech, sind ebenfalls möglich. Der hydraulische Durchmesser der Gemischdurchtrittsöffnungen 18 soll bei allen Ausführungsformen nicht größer als 1,1 mm sein. Im Inneren des Brennerrohres ist eine Verteilvorrichtung 15 angebracht, die hier als sich parallel zum Flammengitter 16 erstreckendes Verteilgitter ausgebildet ist, das zur gleichmäßigen Verteilung des Gemisches auf das Flammengitter 16 beiträgt, so daß sich eine gleichmäßige Flammenfront ausbildet.

Zum Schutz des Bodenbleches des Backraumes 4 vor Überhitzung und um eine gleichmäßige Wärmeverteilung im Backraum zu erreichen, ist oberhalb des Brennerrohres 14 ein Schutzblech 23 angebracht.

Zu beiden Seiten des Brennerrohres 14 verlaufen Abschirmbleche 17, die zur Stabilisierung der Flammen und zu deren Schutz gegen Fremdluftzutritt beitragen.

Die gesamte an der Verbrennung beteiligte Luftmenge wird vom Gasstrahl in das Mischrohr 13 gesaugt. Eine genügend große Luftzufuhr wird bekanntermaßen z. B. dadurch gewährleistet, daß der engste Durchmesser des Mischrohres 13 etwa das 15fache des Gasdüsen-Durchmessers beträgt.

Da der Luftdurchsatz bald nach der Zündung des Brenners infolge des sich durch die Erhitzung vergrößernden Strömungswiderstandes am Flammengitter zurückgeht, ist es vorteilhaft, nach der Zündung des Brenners das Brenngas vor dessen Austritt aus der Gasdüse zu erwärmen, da damit eine von der Gastemperatur bzw. der dadurch bewirkten Verringerung der Gasdichte abhängige Veränderung des Gasmengendurchsatzes bewirkt wird. Infolgedessen bleibt die Luftzahl, d. h. das Verhältnis der durch das Mischrohr zum Brenner strömenden Gas- und Luftmenge während des Brennerbetriebes etwa konstant auf dem gleichen Wert wie bei der Zündung.

Die Gaszuführungsleitung 19 wird deshalb derart durch das Backofengehäuse, z. B. wie dargestellt an der Rückwand des Backofens entlanggeführt, daß die Temperatur der Leitung im Betriebszustand mindestens 100° C und höchstens 300° C beträgt. — Die Gastemperatur soll 300° C nicht überschreiten, um eine Zersetzung von Komponenten des Brenngases zu vermeiden. —

Vorteilhafterweise kann an Stelle der Gasvorwärmung oder zusätzlich am Ende des Mischrohres eine nicht dargestellte Bimetall-gesteuerte Kaltstartklappe eingebaut werden, die im Anfahrzustand dem Gas-Luft-Gemisch einen zusätzlichen Strömungswiderstand entgegensetzt, so daß die Luftzahl beim Start des Brennerbetriebes etwa gleichgroß ist wie im Beharrungszustand. Die Eintrittsöffnung 12 des Mischrohres 13 und die Gasdüse 11 liegen im Ansaugraum 7, in dessen Boden sich vor dem Mischrohr zehn runde Luftdurchtrittsöffnungen 8 befinden, deren freier Durchtrittsquerschnitt zusammen etwa 250 mm² pro kW Nennwärmebelastung beträgt. — Zahl, Anordnung und Form der Luftdurchtrittsöffnungen können auch anders gewählt werden. Außerdem kann der Ansaugraum auch einen größeren Bereich des Mischrohres oder sogar das gesamte Mischrohr umschließen. —

Der Ansaugraum 7 ist mit dem Brennraum 6 über die beispielsweise schlitzförmige Druckausgleichsöffnung 9 verbunden, die dafür sorgt, daß der vom Auftrieb und vom Umwälzventilator bewirkte Sog bzw. Unterdruck sich nicht nur auf das Brennerrohr 14, sondern in gleicher Weise auf den Ansaugraum 7 auswirkt.

## Patentansprüche

1. Gasbeheizter Backofen mit einem an der Rückwand (5) des Backofens angeordneten Umwälzventilator (10), der die Zirkulation eines Abgas-Luft-Gemisches durch den Backraum (4) bewirkt und in dessen Einflußbereich sich Führungsbleche (2, 3) für das Abgas-Luft-Gemisch befinden, und einem aus Gasdüse (11), Mischrohr (13) und Brennerrohr (14) bestehenden Gasbrenner (1), der unter dem Bodenblech des Backraumes (4) in einem Brennraum (6) angeordnet ist, dadurch gekennzeichnet, daß der Brennraum (6) gegen unmittelbaren Luftzutritt von außen geschlossen ist, daß mindestens die Eintrittsöffnung (12) des Mischrohrs (13) und die Gasdüse (11) des in bekannter Weise mit überstöchiometrischer Luftvormischung betriebenen Gasbrenners (1) sich in einem Ansaugraum (7) befinden, der Luftzutrittsöffnungen (8) sowie mindestens eine Druckausgleichsöffnung (9) zwischen dem Ansaugraum (7) und dem Brennraum (6) besitzt, daß das im Brennraum befindliche Brennerrohr (14) im Innern eine Verteilvorrichtung (15) besitzt und auf der Oberseite ein Flammengitter (16) aufweist, daß seitlich am Brennerrohr (14) Abschirmbleche (17) verlaufen, und daß der freie Durchtrittsquerschnitt der Luftzutrittsöffnungen (8) 150 mm$^2$ bis 350 mm$^2$, vorzugsweise 250 mm$^2$, pro kW Nennwärmebelastung des Brenners beträgt.

2. Backofen nach Anspruch 1, dadurch gekennzeichnet, daß der hydraulische Durchmesser der Gemischdurchtrittsöffnungen (18) des Flammengitters (16) nicht größer als 1,1 mm ist.

3. Backofen nach Anspruch 1 oder 2, dadurch gekennzeichnet, daß zur Vorwärmung des Brenngases ein Abschnitt einer mit der Gasdüse (11) verbundenen Gaszuführungsleitung (19) nahe einer Wand (5) des Backofengehäuses durch den Brennraum (6) geführt ist.

## Claims

1. A gas-fired baking oven with an impeller (10) arranged at the rear wall (5) of said oven for circulating a mixture of products of combustion and air in the oven chamber (4) of said oven said mixture being guided by plates (2, 3) and incorporating a gas burner (1) consisting of an injector (11), a burner mixing tube (13) and a burner throat (14) arranged in a combustion chamber (6) below the bottom plate of said oven chamber (4), characterized in that said combustion chamber (6) is sealed to prevent the direct ingress of external air and in that at least the inlet orifice (12) of said burner mixing tube (13) and said injector (11) of said gas burner (1) combusting a fuel-lean mixture of fuel gas and combustion air by known methods are housed in an intake chamber (7) with air inlet openings (8) and at least one pressure equalization opening (9) between said intake chamber (7) and said combustion chamber (6) and in that a distributing device (15) is arranged inside said burner throat (14), said burner throat being covered by a grid (16) and in that shielding plates (17) are arranged along the sides of said burner throat (14) and in that the cross section of said air inlet openings (8) is 150 mm$^2$ to 350 mm$^2$ and preferably 250 mm$^2$ for each kilowatt of rated burner heat input.

2. An oven according to claim 1, characterized in that the inside diameter of each port (18) of said grid (16) is not in excess of 1.1 mm.

3. An oven according to any of claims 1 or 2, characterized in that a section of gas line (19) to said injector (11) is laid in said combustion chamber (6) close to a wall (5) of the oven casing to preheat the fuel gas.

## Revendications

1. Four de boulangerie chauffé au gaz avec un ventilateur (10) à la paroi arrière (5) du four pour assurer la circulation d'un mélange air/fumées dans la chambre du four (4), muni de tôles de guidage (2, 3) du mélange, et possédant un brûleur à gaz (1) composé d'un injecteur (11), d'un tube mélangeur (13) et d'un col du mélangeur (14), disposé dans une chambre de combustion (6) au-dessous de la tôle de fond de la chambre du four (4), caractérisé par le fait que la chambre de combustion (6) est étanche à l'infiltration directe de l'air extérieur, qu'au moins l'ouverture d'entrée (12) du tube mélangeur (13) et l'injecteur (11) du brûleur (1), fonctionnant de façon classique avec un prémélange en excès d'air, sont disposés dans une chambre d'aspiration (7) possèdant des ouvertures d'entrée d'air (8) et au moins une ouverture d'égalisation de pression (9) entre la chambre d'aspiration (7) et la chambre de combustion (6), qu'à l'intérieur du col du mélangeur (14) disposé dans la chambre de combustion se trouve un dispositif de distribution (15) et à sa partie avale une grille (16), que des tôles de protection (17) sont placées le long du col du mélangeur (14) et que la section libre des ouvertures d'entrée d'air (8) est de 150 mm$^2$ à 350 mm$^2$, de préférence de 250 mm$^2$, par kilowatt de débit calorifique nominal du brûleur.

2. Four selon la revendication 1, caractérisé par le fait que le diamètre intérieur des ouvertures de sortie du mélange (18) de la grille (16) n'est pas supérieur à 1,1 mm.

3. Four selon l'une des revendications 1 ou 2, caractérisé par le fait que, pour le préchauffage du gaz combustible, une section de la conduite d'amenée du gaz (19) à l'injecteur (11) passe par la chambre de combustion (6) près d'une paroi (5) du four.

## Fig.1

## Fig.2